Europäisches Patentamt

European Patent Office

Office européen des brevets

(19)

(11) Numéro de publication: **0 204 604**
**A1**

(12) **DEMANDE DE BREVET EUROPEEN**

(21) Numéro de dépôt: **86401071.5**

(22) Date de dépôt: **21.05.86**

(51) Int. Cl.⁴: **F16D 55/22**

(30) Priorité: **30.05.85 FR 8508113**

(43) Date de publication de la demande:
**10.12.86 Bulletin 86/50**

(84) Etats contractants désignés:
**DE GB IT**

(71) Demandeur: **BENDIX France**
**126, rue de Stalingrad**
**F-93700 Drancy(FR)**

(72) Inventeur: **Claverie, Jean-Claude**
**Le Hameau de l'Etang**
**F-93470 Coubron(FR)**

(74) Mandataire: **Le Moenner, Gabriel et al**
**SERVICE BREVETS BENDIX 44, Rue François**
**1er**
**F-75008 Paris(FR)**

(54) **Ressort de plaque de poussée pour frein à disque.**

(57) L'invention se rapporte à un ressort de plaque de poussée pour frein à disque à étrier coulissant - (10) sur un support fixe (12) comportant un premier élément de friction (14) susceptible d'être appliqué sur une face d'un disque de freinage au moyen d'un moteur de frein au travers d'une plaque de poussée (34) et un deuxième élément de friction susceptible d'être appliqué sur l'autre face du disque au travers de l'étrier coulissant. Selon l'invention le ressort (64) est constitué d'une lame métallique allongée, fixée à la plaque de poussée (34) et coopère avec une partie périphérique extérieure (80) de l'étrier (10) sollicitant radialement vers l'extérieur la plaque (34) en appui radial sur des surfaces correspondantes - (50), associées au support fixe (12).

EP 0 204 604 A1

FIG_2

Xerox Copy Centre

## RESSORT DE PLAQUE DE POUSSEE POUR FREIN A DISQUE

L'invention se rapporte à un ressort de plaque de poussée pour frein disque, notamment destiné à équiper un véhicule automobile.

L'invention concerne plus particulièrement un ressort de plaque de poussée pour frein à disque à étrier coulissant sur un support fixe, comportant un premier élément de friction susceptible d'être appliqué sur une face d'un disque de freinage au moyen d'un moteur de frein au travers d'une plaque de poussée et un deuxième élément de friction susceptible d'être appliqué sur l'autre face du disque au travers de l'étrier coulissant.

On connaît de nombreux freins à disque de ce type, comme par exemple celui décrit dans la demande de brevet français 84-17729 déposée par la demanderesse. Ce document décrit un frein à disque dans lequel un moteur de frein sollicite un élément de friction au travers d'une plaque de poussée guidée dans des rainures formées sur le support fixe, en deux zones circonférenciellement espacées du fait de l'étrier coulissant et des clavettes guidant celui-ci. L'axe de poussée du moteur de frein étant radialement plus éloigné que la ligne qui joint les deux rainures, l'action du moteur de frein sur la plaque de poussée provoque un basculement de celle-ci, d'une part, et d'autre part est susceptible de provoquer le coincement des saillies formées sur la plaque de poussée dans les rainures correspondantes du support fixe. Un tel coincement interdisant tout fonctionnement correct du frein.

Le document français FR -A-2.526.902 propose une plaque de poussée solidaire du piston de commande, ce qui permet entre autre d'éviter les inconvénients mentionnés ci-dessus. Néanmoins, toute rotation de l'étrier dans un plan perpendiculaire au plan du disque, du fait des efforts de freinage ou d'une usure irrégulière des éléments de friction, provoque des contraintes importantes entre la partie cylindrique de la plaque de poussée et l'alésage correspondant formé dans l'étrier. De telles contraintes provoquent un frottement important qui peut d'une part user l'alésage et la partie cylindrique et d'autre part réduire l'efficacité du frein du fait des forces axiales à vaincre. Les usures ou les déformations dues à ces contraintes, qui sont très importantes dans les freins poids lourds, peuvent endommager suffisamment l'étrier et rendre le fonctionnement de celui-ci suffisamment peu fiable pour nécessiter le remplacement des composants.

L'invention propose un ressort de plaque de poussée pour frein à disque, de construction simple et évitant les inconvénients mentionnés ci-dessus.

Dans ce but, l'invention propose un ressort de plaque de poussée pour frein à disque à étrier coulissant sur un support fixe, comportant un premier élément de friction susceptible d'être appliqué sur une face d'un disque de freinage au moyen d'un moteur de frein au travers d'une plaque de poussée et un deuxième élément de friction susceptible d'être appliqué sur l'autre face du disque au travers de l'étrier coulissant, caractérisé en ce que ledit ressort est constitué d'une lame métallique allongée, fixée à ladite plaque de poussée et coopérant avec une partie périphérique extérieure dudit étrier, sollicitant radialement vers l'extérieure ladite plaque en appui radial sur des surfaces correspondantes, associées au support fixe.

Il apparaît que grâce à ces caractéristiques, la plaque de poussée n'est plus susceptible de coincement dans ses guidages, et comme elle est indépendante du moteur de frein elle ne peut provoquer des détériorations de celui-ci.

Ce ressort permet également d'équilibrer les efforts de frottement axiaux de la plaque de poussée par rapport à l'axe de poussée du moteur de frein et éviter ainsi tout basculement du fait de la poussée de celui-ci.

On décrira maintenant titre d'exemple non limitatif un mode de réalisation de l'invention, en se référant aux dessins annexés dans lesquels :

La Figure 1 est une vue de dessus avec découpe partielle d'un frein à disque comportant le ressort objet de l'invention;

La Figure 2 est une vue en coupe selon la ligne II-II du frein de la Figure 1.

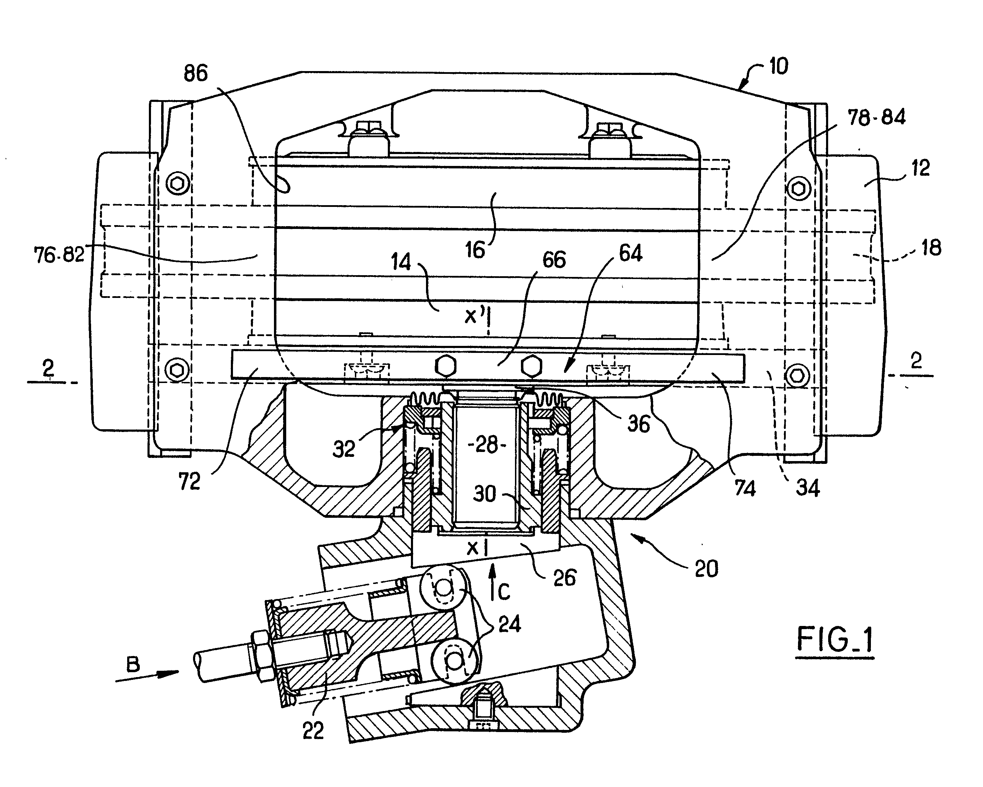

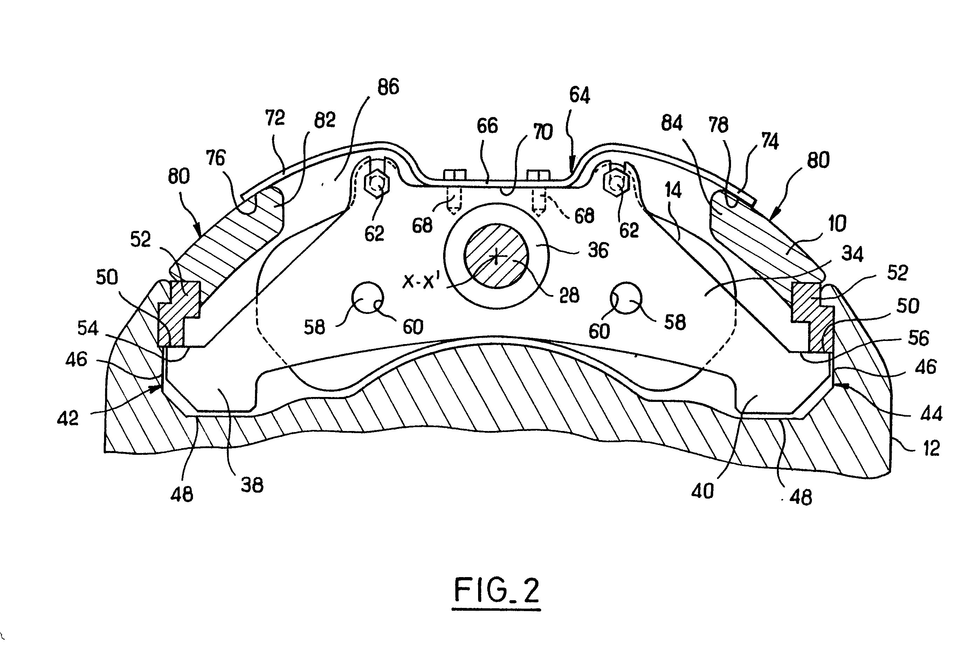

Le frein à disque représenté sur les figures 1 et 2 comporte un étrier désigné dans son ensemble par la référence 10, coulissant sur un support fixe 12, associé à une partie fixe du véhicule - (non représentée). Le frein à disque comporte deux éléments de friction 14 et 16, placés de part et d'autre d'un disque de freinage 18. L'étrier 10 comporte un moteur de frein désigné dans son ensemble par la référence 20, ce moteur de frein et du type à commande à coin, c'est-à-dire qu'il comporte un coin 22, susceptible d'être déplacé dans le sens de la flèche B sous l'effet d'un verin par exemple, ce déplacement dans le sens de la flèche B au travers des galets 24 sollicite une pièce coulissante 26 dans le sens de la flèche C. Cette pièce coulissante 26 est susceptible de déplacer dans lesens de la flèche C un poussoir fileté 28 au travers d'un écrou 30. Le moteur de frein 20 est équipé en outre d'un dispositif de réglage automatique désigné dans son ensemble par la référence 32, ce réglage automatique peut être du type de celui décrit dans le brevet français FR 1.317.919 ou bien dans la demande de brevet français n° 83-01438, ce réglage automatique ne sera pas décrit davantage. Le poussoir 28 est susceptible de solliciter un premier élément de friction 14 au travers d'une plaque de poussée 34 au moyen d'une portion élargie 36 placée du côté de l'élément de friction 14. En se reportant à la Figure 2, on voit que la plaque de poussée 34 comporte deux saillies circonférenciellement espacées 38 et 40, guidées radialement par deux encoches en forme de U 42 et 44 respectivement. Comme on le voit sur la Figure 2, chacune des encoches 42 et 44 en forme de U comporte un fond 46 s'étendant sensiblement radialement et formé dans le support fixe 12, une des branches du U 48 est également formée dans le support fixe 12 et s'étend sensiblement perpendiculairement au fond 46. L'autre branche du U 50 est formée sur une clavette de guidage 52 destinée à guider l'étrier 10 par rapport au support fixe 12. Les saillies 38 et 40 présentent des portions planes 54 et 56 placées en vis-à-vis des surfaces 50 des clavettes 52 correspondantes, ces surfaces 50 étant formées par les branches des U radialement les plus éloignées de l'axe du disque 18. D'une façon conventionnelle, l'élément de friction 14 comporte des saillies 58 qui pénètrent dans des orifices 60 formés dans la plaque de poussée 34 pour transmettre à celle-ci les efforts de freinage. De plus, l'élément de friction 14 est solidarisé à la plaque de poussée 34 au moyen de vis 62.

Conformément à l'invention, la plaque de poussée 34 comporte un ressort de plaque de poussée 64 fixé par une portion centrale 66 au moyen de deux vis 68 à une surface périphérique 70 de la plaque de poussée 34. Le ressort 64, constitué d'une lame métallique allongée, comporte outre la portion centrale 66 deux extrémités libres 72 et 74 qui coopèrent avec deux surfaces 76 et 78 formées sur une partie périphérique extérieure 80 de l'étrier 10. Ces surfaces 76 et 78 sont formées à proximité des bords 82 et 84 s'étendant axialement d'une ouverture 86 formée dans la voûte de l'étrier 10. Cette ouverture 86 est destinée à l'extraction radiale des éléments de friction 14 et 16. En désignant par X X' l'axe de poussée du moteur de frein 20 on voit que celui-ci est placé sensiblement au milieu entre les lignes qui joignent d'une part les surfaces 76 et 78 d'appui des extrémités libres 72 et 74 du ressort 64, et d'autre part les surfaces 50 sur lesquelles s'appuient les surfaces 54 et 56 de la plaque 34 sous l'effet du ressort 64.

Le ressort 64, lorsque la plaque de poussée 34 est sollicitée par le moteur de frein 20, engendre des frottement axiaux d'une part au niveau des surfaces 76 et 78 et des extrémités libres 72 et 74, et d'autre part au niveau des contacts entre les surfaces 54 et 56 avec les surfaces 50 des clavettes 52. Comme ces surfaces sont sensiblement symétriques par rapport à l'axe de poussée XX' du moteur de frein 20, la plaque de poussée 34 ne risque pas une mise en biais et ainsi grâce au ressort 64 qui sollicite radialement vers l'extérieur la plaque 34, celle-ci ne risque pas de coincement au niveau des guidages, saillies 38 et 40 et rainures 42 et 44, augmentant ainsi considérablement la fiabilité du frein.

Il est bien évident que l'invention n'est pas limitée au mode de réalisation représenté, en particulier le moteur de frein peut être autre qu'un moteur à coin, de même la forme de la plaque de poussée et de ses guidages dans le support fixe peut être modifiée sans sortir du cadre de la présente invention. Le ressort 64 objet de l'invention, peut également avoir toute autre forme, c'est le cas où l'élément de friction 14 est fixé autrement à la plaque de poussée que par les vis 62, dans ce cas le ressort 64 ne présente pas de bosses pour éviter les bossages de fixation. De même, tout autre moyen que des vis peut être envisagé pour fixer le ressort sur la plaque de poussée.

**Revendications**

1 -Ressort (64) de plaque de poussée pour frein à disque à étrier coulissant (10) sur un support fixe (12) comportant un premier élément de friction (14) susceptible d'être appliqué sur une face d'un disque de freinage (18) au moyen d'un moteur de frein (20) au travers d'une plaque de poussée (34) et un deuxième élément de friction - (16) susceptible d'être appliqué sur l'autre face du disque (18) au travers de l'étrier coulissant (10) caractérisé en ce que ledit ressort (64) est constitué d'une lame métallique allongée fixée à ladite plaque de poussée (34) et coopérant avec une partie périphérique extérieure (80) dudit étrier (10) sollicitant radialement vers l'extérieur ladite plaque (34) en appui radial sur des surfaces correspondantes (50) associées au support fixe (12).

2 -Ressort selon la revendication 1, caractérisé en ce qu'il comporte une portion centrale (66) fixée à une surface périphérique (70) de ladite plaque de poussée (34) et deux extrémités libres (72, 74) coopérant avec ladite partie périphérique (80) de l'étrier (10).

3 -Ressort selon la revendication 2, caractérisé en ce que ladite plaque de poussée (34) étant guidée radialement par deux saillies (38, 40) de ladite plaque coopérant avec deux encoches en forme de U (42, 44) circonférenciellement espacées, les côtés ouverts se faisant face, ledit ressort (64) sollicite lesdites saillies (38, 40) en appui radial sur les branches des U (50) radialement les plus éloignées de l'axe du disque (18).

4 -Ressort selon l'une des revendications 2 ou 3, caractérisé en ce que lesdites extrémités libres - (72, 74) coopèrent avec deux surfaces (76, 78) circonférenciellement espacées, formées à proximité des bords (82, 84) s'étendant axialement d'une ouverture (86) de l'étrier (10) formée dans la voûte de celui-ci.

5 -Frein à disque du type comportant un étrier (10) monté coulissant sur un support fixe (12), caractérisé en ce que l'axe de poussée du moteur de frein (XX') est situé sensiblement au milieu entre les lignes (50-50, 76-78) qui joignent des surfaces d'appui radial (50) d'une plaque de poussée (34) d'une part et des surfaces (76, 78) de la partie périphérique (80) de l'étrier (10) sur lesquels s'appuient des extrémités libres (72, 74) d'un ressort (64) selon l'une des revendications précédentes.

FIG.1

FIG.2

# RAPPORT DE RECHERCHE EUROPEENNE

Office européen des brevets

Numero de la demande

EP 86 40 1071

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 333 550 (KENJI SHIRAI) <br> * En entier * | 1 | F 16 D 55/22 |
| A | FR-A-2 367 221 (GENERAL MOTORS) <br> * En entier * | 1 | |
| A,D | FR-A-2 526 902 (WATANABE) <br> * En entier * | 1 | |
| A,D | EP-A-0 186 537 (BENDIX) <br> * En entier * | 1 | |

DOMAINES TECHNIQUES RECHERCHES (Int. Cl.4)

F 16 D 55/22
F 16 D 55/224
F 16 D 65/02

Le présent rapport de recherche a été établi pour toutes les revendications

| Lieu de la recherche | Date d'achèvement de la recherche | Examinateur |
|---|---|---|
| LA HAYE | 05-09-1986 | HARTEVELD C.D.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82